# EUROPEAN PATENT APPLICATION

(11) **EP 3 778 182 A1**
(43) Date of publication of application: **17.02.2021**
(21) Application number: 19777397.1
(22) Date of filing: 20.03.2019
(51) Int. Cl.: B29C 45/34, B29C 33/10

(54) **MOLD SYSTEM**

(30) Priority: 27.03.2018 JP 2018060813
(71) Applicant: Sumitomo Heavy Industries, Ltd., Tokyo 141-6025 (JP)
(72) Inventor: SHISHIDO, Yoshiko, Yokosuka-shi, Kanagawa 237-8555 (JP); NAMATAME, Akira, Yokosuka-shi, Kanagawa 237-8555 (JP); KUDOU, Yuuki, Yokosuka-shi, Kanagawa 237-8555 (JP)
(74) Representative: Walcher, Armin
(86) International application number: PCT/JP2019/011737
(87) International publication number: WO 2019/188671

(57) **Abstract**

Provided is a mold system including a mold device that has a stationary mold and a movable mold and includes a cavity space formed inside by the stationary mold and the movable mold and a gas vent that allows the cavity space and an external space to communicate with each other; a mold device temperature adjusting mechanism that adjusts a temperature of the mold device; and a gas vent heating mechanism that heats the gas vent.

## Description

### Technical Field

The present invention relates to a mold system.

### Background Art

Supplying and filling a cavity space of a mold device with a molten resin by an injection device to manufacture a molded product having a desired shape has been performed from the past.

In order to supply and fill the cavity space of the mold device with the molten resin, it is necessary to exhaust the air in a cavity space to an external space.

Additionally, when the molten resin is supplied into the cavity space of the mold device, there is a case where a portion of the resin may be decomposed to generate a resin decomposition gas. When the resin decomposition gas stays in the cavity space, there is a concern that the resin decomposition gas may affect the filling of the molten resin into the cavity space. Therefore, it is necessary to exhaust the resin decomposition gas to the external space as well.

Thus, in order to exhaust the air present in the cavity space and the resin decomposition gas from the cavity space to the external space, a gas vent that allows the cavity space and the external space of the mold device to communicate with each other has been provided in the mold device from the past.

Also, various studies have been made on the design of a vent structure and a method of collecting the data required for the design so that the resin decomposition gas or the like generated in the cavity space can be appropriately exhausted from the gas vent. For example, Patent Document 1 discloses a method of measuring generated gas of a mold injection material.

### Citation List

### Patent Literature

[PTL 1] Japanese Unexamined Patent Publication No. 7-40390

### Summary of Invention

### Technical Problem

However, when the mold device is repeatedly used, there is a case where a solid resin decomposition product or the like may be deposited in the gas vent or the like, and the gas vent may be clogged, which makes it difficult to exhaust the air in the cavity space and the generated resin decomposition gas.

In this way, when the gas vent is clogged due to a solid resin decomposition product or the like, insufficient filling (poor filling) of the resin may occur or the deposited solid resin decomposition product may adhere to the molded product of the resin, which may cause a decrease in yield. For this reason, there has been a demand for a mold system capable of suppressing the clogging of the gas vent.

The present invention has been made in view of the above problems, and an object of one aspect of the present invention is to provide a mold system capable of suppressing clogging of a gas vent.

### Solution to Problem

In one aspect of the present invention, provided is a mold system including a mold device that has a stationary mold and a movable mold and includes a cavity space formed inside by the stationary mold and the movable mold and a gas vent that allows the cavity space and an external space to communicate with each other;
a mold device temperature adjusting mechanism that adjusts a temperature of the mold device; and
a gas vent heating mechanism that heats the gas vent.

### Advantageous Effects of Invention

According to one aspect of the present invention, it is possible to provide a mold system capable of suppressing the clogging of the gas vent.

### Brief Description of Drawings

Fig. 1 is an explanatory diagram of a mold system according to an embodiment of the present invention.
Fig. 2 is an enlarged view of a region A in Fig. 1, illustrating a configuration in which a resin is being filled in a cavity space.
Fig. 3 is an enlarged view of the region A of Fig. 1, illustrating a configuration after the cavity space is filled with the resin.
Fig. 4 is a cross-sectional view taken along line B-B' of Fig. 1.
Fig. 5 illustrates a configuration example of a cross section taken along line C-C' of Fig. 2.
Fig. 6 illustrate another configuration example of the cross section taken along line C-C' of Fig. 2.
Fig. 7 is a view illustrating a state at the time of completion of mold opening of an injection molding system according to an embodiment of the present invention.
Fig. 8 is a view illustrating a state at the time of mold clamping of the injection molding system according to the embodiment of the present invention.

### Description of embodiments

Hereinafter, a mold system and an injection molding system according to an embodiment will be described with reference to the attached drawings. In addition, in the present specification and the drawings, there is a case where substantially the same constituent elements may be designated by the same reference numerals to omit duplicate descriptions.

### [Mold system]

A mold system 11 of the present embodiment can include a mold device 800, a mold device temperature adjusting mechanism 804, and a gas vent heating mechanism 805.

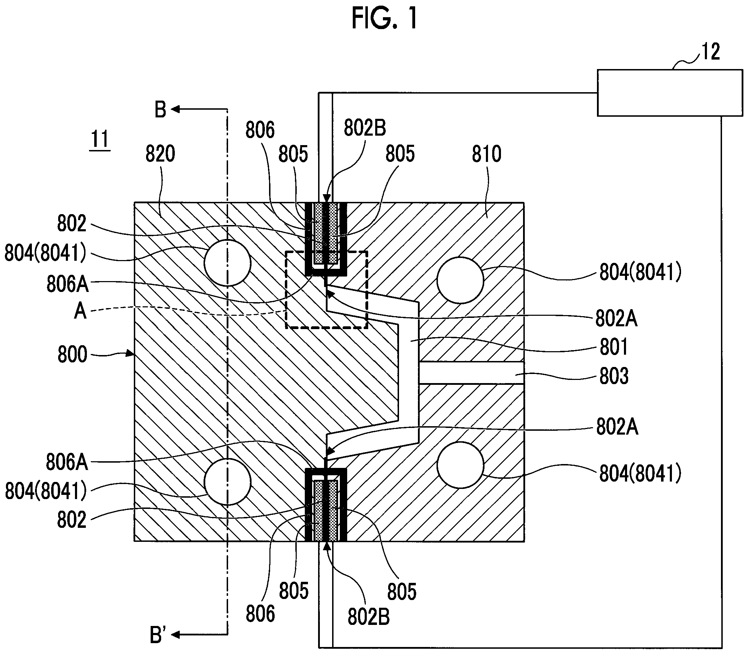

The mold system of the present embodiment will be described with reference to Figs. 1 to 6.

Fig. 1 illustrate the mold system 11 of the present embodiment, and the mold device 800 included in the mold system 11 is illustrated in a cross-sectional view in a plane passing through a cavity space 801 and a gas vent 802.

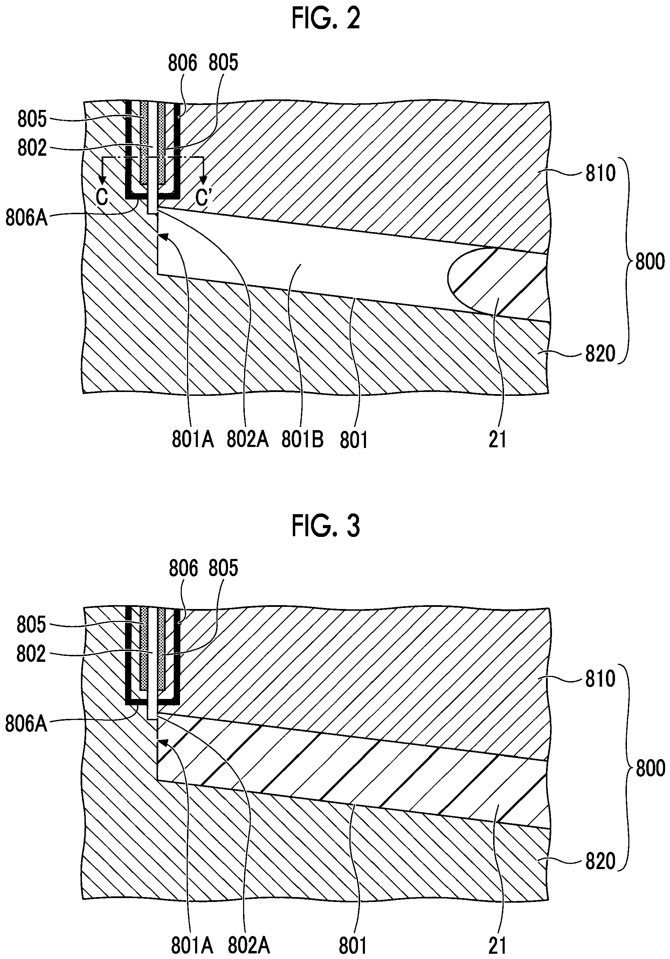

Figs. 2 and 3 are enlarged views of a region A illustrated by a dotted line in Fig. 1. Fig. 2 illustrates a configuration in which the cavity space 801 is being filled with a resin 21, and Fig. 3 illustrates a configuration after the cavity space 801 is filled with the resin 21.

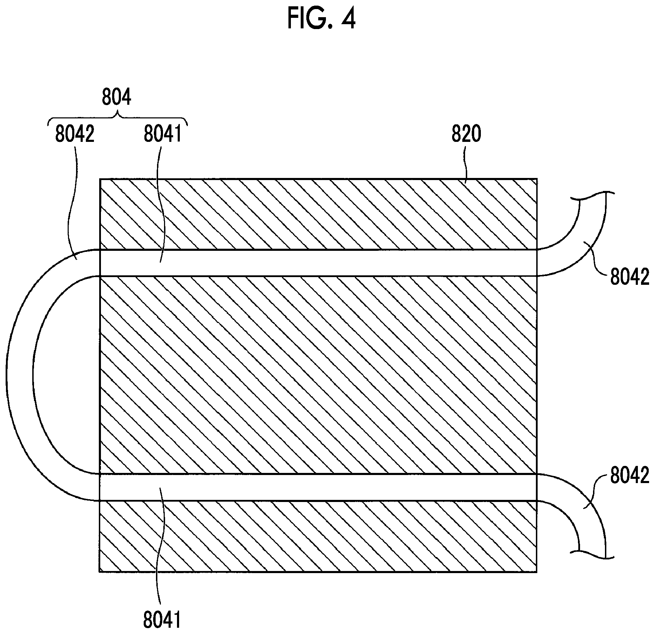

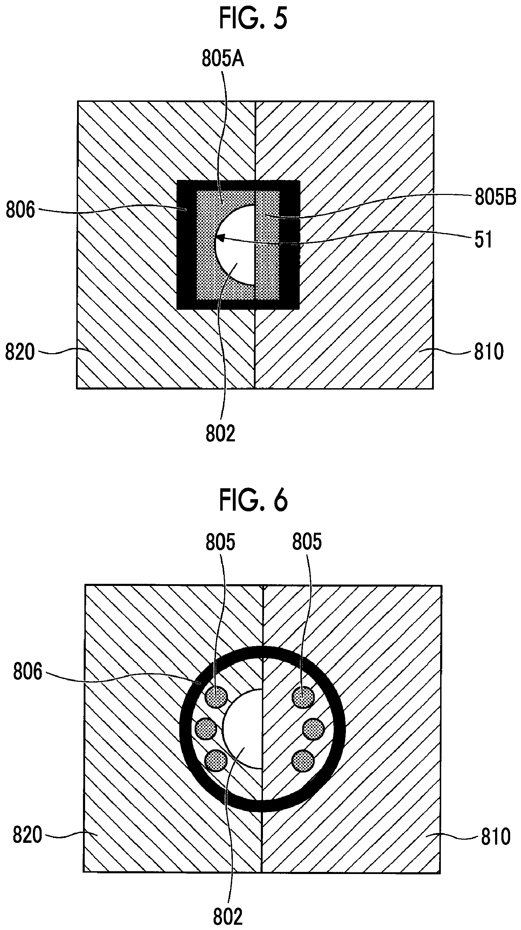

Fig. 4 illustrates a cross-sectional view taken along line B-B' of Fig. 1. Additionally, Figs. 5 and 6 illustrate a configuration example of a cross section taken along line C-C' of Fig. 2.

As will be described below, the mold device included in the mold system of the present embodiment may have an incidental facility such as a movable member, but the description thereof will be omitted in Figs. 1 to 6 for the convenience of illustration of the drawings.

### (Mold device)

As illustrated in Fig. 1, the mold system 11 of the present embodiment can include the mold device 800. The mold device 800 can have a fixed stationary mold 810 and a movable mold 820 in which the distance between the movable mold 820 and the stationary mold 810 can be changed.

Also, the mold device 800 can have a cavity space 801 that is formed inside by the stationary mold 810 and the movable mold 820, and a gas vent 802 that allows the cavity space 801 and an external space to communicate with each other.

The movable mold 820 can be moved, for example, in a left-right direction in the drawing and can be configured to be capable of changing the distance between the movable mold 820 and the stationary mold 810. Fig. 1 illustrates a mold-clamped state in which the movable mold 820 is in contact with the stationary mold 810.

In the clamped state, the cavity space 801, which is a space for filling resin as a molding material between the stationary mold 810 and the movable mold 820, is formed by both the molds. By supplying molten resin to a molding material introduction port 803 communicating with the cavity space 801 by an injection device, the resin is filled in the cavity space 801.

As illustrated in Figs. 2 and 3, the resin 21 supplied into the cavity space 801, is filled from the resin introduction port toward an end portion 801A of the cavity space 801.

Fig. 2 illustrates a state before the resin supplied into the cavity space 801 reaches an end portion 801A of the cavity space 801. Additionally, Fig. 3 illustrates a state after the resin supplied into the cavity space 801 reaches the end portion 801A of the cavity space 801.

However, when the molten resin is supplied into the cavity space 801, there is a case where a portion of the resin may be decomposed to generate a resin decomposition gas. Then, when the resin decomposition gas stays in the cavity space 801, the resin 21 cannot reach the end portion 801A of the cavity space 801, and there is a concern that the underfilling of the resin occurs.

For this reason, the mold device 800 can have the gas vent 802 that allows the cavity space 801 and an external space of the mold device 800 to communicate with each other.

By providing the gas vent 802, as illustrated in Fig. 2, the resin decomposition gas accumulated in a space 801B not filled with the resin in the cavity space 801 is pressed by the resin 21 and exhausted from the gas vent 802 to the external space. Also, as illustrated in Fig. 3, the resin 21 can be filled up to the end portion 801A of the cavity space 801, and the occurrence of insufficient filling of the resin into the cavity space 801 can be suppressed.

The number of gas vents 802 is not particularly limited, and for example, one gas vent may be provided for one cavity space 801 or a plurality of gas vents 802 may be provided for one cavity space 801.

The gas vent 802 can be a tubular void that connects the cavity space 801 and the external space of the mold device 800 to each other. Also, the gas vent 802 can be constituted of, for example, a groove (grooves) formed on any one or both of a surface of the stationary mold 810 facing the movable mold 820 and a surface of the movable mold 820 facing the stationary mold 810. Figs. 2 and 3 illustrate an example in which a groove is formed in the movable mold 820 to form the gas vent 802.

### (Mold device temperature adjusting mechanism)

As illustrated in Figs. 1 and 4, the mold system of the present embodiment can have a mold device temperature adjusting mechanism 804 that adjusts the temperature of the mold device 800 in order to control the temperature of the entire mold device 800 and control the cooling rate of the resin filled in the cavity space 801.

For example, as illustrated in Figs. 1 and 4, the mold device temperature adjusting mechanism 804 can have a flow path 8041 that is provided in the mold device 800 and an external pipe 8042 that is connected to the flow path 8041. In addition, the illustration of the external pipe 8042 is omitted in Fig. 1. Then, by supplying and circulating a heat medium such as water in the flow path 8041 via the external pipe 8042, the temperature of the entire mold device 800 can be adjusted and controlled. In addition, the mold device temperature adjusting mechanism 804 may further have the flow path 8041, and a pump, a tank, and the like for supplying the heat medium to the external pipe 8042.

### (Gas vent heating mechanism)

As illustrated in Figs. 1 to 3, the mold system of the present embodiment can have the gas vent heating mechanism 805 that heats the gas vent 802.

As already described, when the filling of the resin into the cavity space 801 is repeatedly carried out a plurality of times, there is a case where a solid resin decomposition product may be deposited inside the gas vent 802. Additionally, depending on the degree of deposition, there is a case where the solid resin decomposition product may adhere to the vicinity of an opening 802A of the gas vent 802 on the cavity space 801 side. When the resin decomposition product is deposited inside the gas vent 802 or in the vicinity of the opening 802A of the gas vent 802 on the cavity space 801 side in this way, there is a case where the gas vent 802 may be clogged and underfilling of the resin to the cavity space 801 may occur. Additionally, there is a case where the deposited solid resin decomposition product may fill the cavity space 801 and adhere to the surface of the molded product, which may impair the appearance.

When the underfilling of the resin or the adhesion of the deposited solid resin decomposition product to the surface of the molded product occurs, it is necessary to exclude the molded product as a defective product depending on the degree of the underfilling or adhesion, which causes a decrease in yield.

Thus, the inventors of the present invention have first studied the cause of the occurrence of clogging of the gas vent 802.

According to the study by the inventors of the present invention, the resin decomposition gas generated by decomposing the resin supplied into the cavity space 801 is heated by the resin supplied into the cavity space 801 while being in the cavity space 801 and is in a gas state or a partially liquid state. However, it has been found that, as the resin decomposition gas is cooled in the gas vent 802, a high boiling point component is precipitated to generate a solid resin decomposition product and the gas vent 802 is clogged.

The already-described mold device temperature adjusting mechanism 804 mainly controls the temperature of the entire mold device 800 so that the resin filled in the cavity space 801 can be cooled at an appropriate speed. For this reason, in the mold device temperature adjusting mechanism 804, it is difficult to control the temperature of the gas vent 802.

Thus, the mold system 11 of the present embodiment can have the gas vent heating mechanism 805 that heats the gas vent 802 as described above separately from the already-described mold device temperature adjusting mechanism 804. By providing the gas vent heating mechanism 805, it is possible to heat the inside of the gas vent 802 and the periphery of the gas vent 802 to an appropriate temperature and suppress the clogging of the gas vent 802 due to the generation of the solid resin decomposition product.

As described above, by providing the gas vent heating mechanism 805, it is possible to carry out the heating of the gas vent 802, which has not been performed in the past, and it is possible to suppress the precipitation of the solid resin decomposition product from the resin decomposition gas passing through the gas vent 802. For this reason, the heating conditions and the like by the gas vent heating mechanism 805 are not particularly limited. For example, a preliminary test or the like can be performed, and the heating conditions or the like can be set so that the solid resin decomposition product is not generated in the gas vent 802 or in the opening 802A of the gas vent 802 on the cavity space 801 side.

A period during which the gas vent 802 is heated by the gas vent heating mechanism 805 is not particularly limited and can be optionally selected depending on the type of resin to be filled in the mold device 800, conditions, and the like.

However, it is preferable that the gas vent heating mechanism 805 heats the gas vent 802 at least during a filling step to be described below in the injection molding system so that the clogging of the gas vent 802 can be suppressed. In particular, the gas vent heating mechanism 805 preferably heats the gas vent at least while the resin is supplied to the cavity space 801. That is, it is preferable that the gas vent heating mechanism 805 heats the gas vent 802 from the start of the supply of the resin to the cavity space 801 to the end of the supply. By stopping the heating by the gas vent heating mechanism 805 after the supply of the resin to the cavity space 801 is ended, it is possible to suppress excessive heating of the resin filled in the cavity space 801.

The specific configuration of the gas vent heating mechanism 805 is not particularly limited, and it is possible to adopt such structure and disposition that the gas vent 802 can be heated.

A configuration example of the gas vent heating mechanism 805 will be described with reference to Figs. 5 and 6. Each drawing is a view schematically illustrating a cross-sectional view taken along line C-C' of Fig. 2.

For example, as illustrated in Fig. 5, at least a portion of an inner wall 51 of the gas vent 802 may be formed by gas vent heating mechanisms 805A and 805B.

In the configuration example of the gas vent heating mechanism illustrated in Fig. 5, the gas vent heating mechanisms 805A and 805B are fitted into holes formed in the stationary mold 810 and the movable mold 820, and a gap formed between the gas vent heating mechanisms 805A and 805B becomes the gas vent 802.

In this way, by configuring at least a portion of the inner wall 51 of the gas vent 802 by the gas vent heating mechanisms 805A and 805B, it is possible to directly heat the gas flowing in the gas vent 802, and the precipitation of the solid resin decomposition product can be particularly suppressed.

Additionally, for example, as illustrated in Fig. 6, the gas vent heating mechanism 805 may be disposed so as to surround the gas vent 802 in a cross section perpendicular to a flow direction of the gas vent 802.

By disposing the gas vent heating mechanism 805 so as to surround the gas vent 802, it is possible to uniformly heat the gas vent 802 from the outer periphery and particularly suppress the precipitation of the solid resin decomposition product or the like.

Although the gas vent heating mechanism 805 is not particularly limited, for example, a rod-shaped or plate-shaped heater can be used. This is because, in the case of the rod-shaped or plate-shaped heater, for example, a recessed portion is formed in the mold device 800, and the heater can be easily installed in the recessed portion. As the heater, for example, a resistance heating type heater using a heating wire or the like can be used.

Additionally, as illustrated in Fig. 1, a heat insulating material 806 can be disposed around the gas vent heating mechanism 805. By disposing the heat insulating material 806 around the gas vent heating mechanism 805, it is possible to suppress the heating of a spot other than the gas vent 802 by heat transfer.

For example, in the configuration example illustrated in Fig. 5, the heat insulating material 806 can be disposed between the gas vent heating mechanisms 805A and 805B, and the stationary mold 810 and the movable mold 820.

Also in the configuration example illustrated in Fig. 6, the heat insulating material 806 can be disposed around the gas vent heating mechanism 805. Specifically, for example, it is preferable to dispose the heat insulating material 806 so as to surround the gas vent heating mechanism 805.

Additionally, as illustrated in Figs. 1 to 3, it is preferable to have the heat insulating material 806A between the cavity space 801 and the gas vent heating mechanism 805. By disposing the heat insulating material 806A between the cavity space 801 and the gas vent heating mechanism 805, it is possible to particularly suppress the heating of the resin filled in the cavity space 801 by the gas vent heating mechanism 805, which is preferable.

### (Gas vent heating mechanism temperature control device)

As illustrated in Fig. 1, the mold system 11 of the present embodiment may further have a gas vent heating mechanism temperature control device 12 that controls the temperature of the gas vent heating mechanism 805.

In the gas vent heating mechanism temperature control device 12, it is preferable to control the temperature of the gas vent heating mechanism 805 such that the temperature of the gas flowing through the gas vent 802 at an opening 802B of the gas vent 802 on the external space side of the mold device 800 is equal to or higher than the temperature at the opening 802A of the gas vent 802 on the cavity space 801 side.

Since the resin decomposition gas is heated in the cavity space 801 due to the resin supplied into the cavity space 801, the precipitation of the solid resin decomposition product or the like is hardly observed. For this reason, by maintaining the temperature equal to or higher than the temperature when the gas flows out of the cavity space 801, for example, for the gas flowing through the gas vent 802, the precipitation of the solid resin decomposition product or the like can be suppressed.

Thus, as described above, it is preferable to control the temperature of the gas vent heating mechanism 805 by the gas vent heating mechanism temperature control device 12 such that the temperature at the opening 802B of the gas vent 802 on the external space side of the mold device 800 is equal to or higher than the temperature at the opening 802A of the gas vent 802 on the cavity space 801 side. By performing heating to such a temperature, the precipitation of the solid resin decomposition product or the like from the resin decomposition gas can be particularly suppressed.

The configuration of the gas vent heating mechanism temperature control device 12 is not particularly limited, but is, for example, a type of computer and can have a central processing unit (CPU) and a storage medium. In addition, examples of the storage medium include a random access memory (RAM), a read-only memory (ROM), a non-volatile RAM (NVRAM), a hard disk drive (HDD), and the like.

The gas vent heating mechanism temperature control device 12 can be connected to, for example, temperature measuring means such as a thermocouple that is disposed in the opening 802B of the gas vent 802 on the external space side of the mold device 800 or the opening 802A of the gas vent 802 on the cavity space 801 side. Additionally, the gas vent heating mechanism temperature control device 12 can be connected to the already-described gas vent heating mechanism 805. Also, the CPU can determine an output to the gas vent heating mechanism 805 in accordance with a temperature control pattern stored in the storage medium on the basis of the temperature information obtained from the temperature measuring means and can control the heating temperature of the gas vent 802 by the gas vent heating mechanism 805.

In addition, although an upper limit of the temperature at which the gas flowing through the gas vent 802 is heated by the gas vent heating mechanism 805 is not particularly limited, there is a concern that heating at an excessively high temperature may shorten the life of the mold device 800. Also, for example, even when the gas flowing through the gas vent 802 is heated so as to has a higher temperature than the boiling point of the resin supplied to the mold device 800, there is no difference in the degree of suppressing the precipitation of the solid resin decomposition product. For this reason, the gas vent heating mechanism 805 is preferably heated such that the temperature of the gas flowing through the gas vent 802 is equal to or lower than the boiling point of the resin supplied to the mold device 800.

Additionally, as already described, since the resin decomposition gas is heated in the cavity space 801 due to the resin supplied into the cavity space 801, the precipitation of the solid resin decomposition product or the like is hardly observed. That is, even when the gas flowing through the gas vent 802 is heated to a higher temperature than the temperature of the resin supplied into the cavity space 801, it is considered that there is no difference in the degree of suppressing the precipitation of the resin decomposition product. For this reason, it is more preferable that the gas vent heating mechanism 805 heats the gas flowing through the gas vent 802 to a temperature equal to or lower than the temperature of the molten resin supplied by the injection device, for example, a temperature equal to or lower than the average temperature of the molding material, that is, the molten resin in a cylinder immediately before the filling step is started after the end of a plasticizing step to be described below in the injection molding system.

According to the mold system of the present embodiment described above, the gas vent heating mechanism is provided in addition to the mold device temperature adjusting mechanism. For this reason, the temperature of the gas vent can be independently controlled, and the clogging of the gas vent can be suppressed.

### [Injection molding system]

The injection molding system of the present embodiment can have the already-described mold system and the injection molding machine.

Since the mold system has been already described, the description thereof will be omitted here.

Here, the injection molding machine will be described.

### (Injection molding machine)

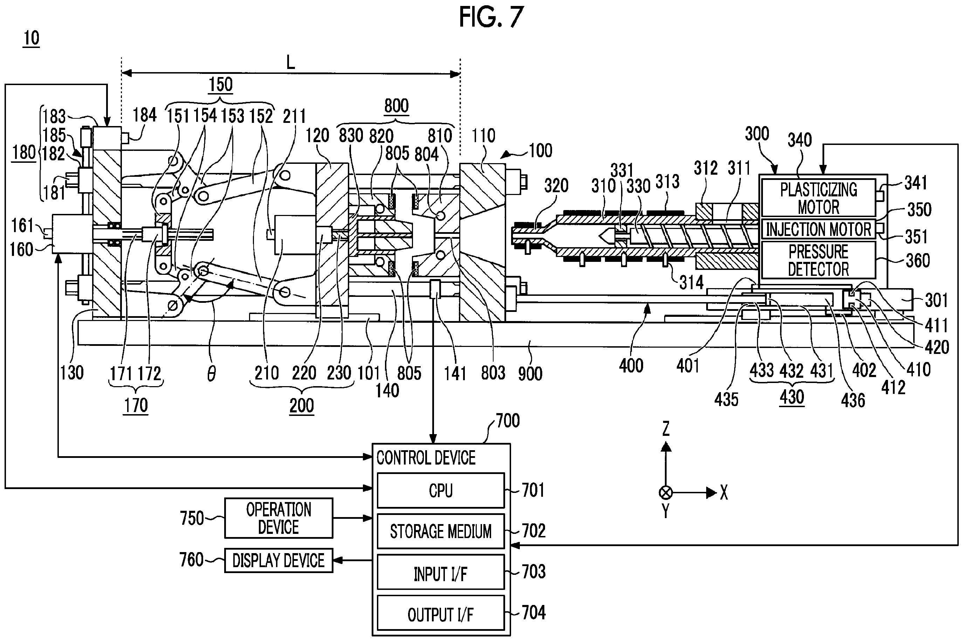

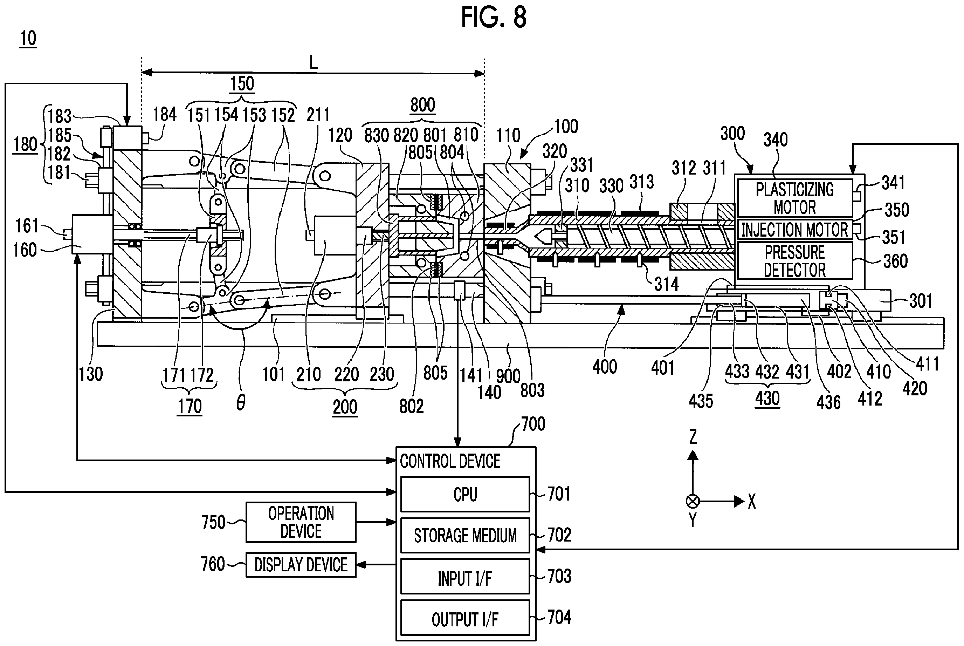

Fig. 7 is a view illustrating a state at the time of completion of the mold opening of the injection molding machine according to one embodiment. Fig. 8 is a view illustrating a state at the time of mold clamping of the injection molding machine according to one embodiment. In Figs. 7 and 8, an X direction, a Y direction, and a Z direction are perpendicular to each other. The X direction and the Y direction represent a horizontal direction, and the Z direction represents a vertical direction. In a case where the mold clamping device 100 is of a horizontal type, the X direction is mold opening and closing directions, and the Y direction is a width direction of the injection molding machine 10. As illustrated in Figs. 7 and 8, the injection molding machine 10 has a mold clamping device 100, an ejector device 200, an injection device 300, a moving device 400, a control device 700, and a frame 900. Hereinafter, respective constituent elements of the injection molding machine 10 will be described.

### (Mold clamping device)

In the description of the mold clamping device 100, the movement direction (the right direction in Figs. 7 and 8) of a movable platen 120 at the time of mold closing will be described as the front, and the movement direction (the left direction in Figs. 7 and 8) of the movable platen 120 at the time of mold opening will be described as the rear.

The mold clamping device 100 performs the mold closing, the mold clamping, and the mold opening of the mold device 800. The mold clamping device 100 is of, for example, a horizontal type, and the mold opening and closing directions are the horizontal direction. The mold clamping device 100 includes a stationary platen 110, a movable platen 120, a toggle support 130, a tie bar 140, a toggle mechanism 150, a mold clamping motor 160, a motion conversion mechanism 170, and a mold space adjustment mechanism 180.

The stationary platen 110 is fixed to the frame 900. The stationary mold 810 is attached to the surface of the stationary platen 110 facing the movable platen 120.

The movable platen 120 is movable in the mold opening and closing directions with respect to the frame 900. A guide 101 for guiding the movable platen 120 is laid on the frame 900. The movable mold 820 is attached to the surface of the movable platen 120 facing the stationary platen 110.

By moving the movable platen 120 forward and backward with respect to the stationary platen 110, the mold closing, the mold clamping, and the mold opening are performed. The mold device 800 is constituted of the stationary mold 810 and the movable mold 820. In addition, a movable member 830 and, a mold device temperature adjusting mechanism 804 and the gas vent heating mechanism 805 already described in the mold system can be disposed as incidental facilities in the mold device 800. Although the illustration is omitted in Figs. 7 and 8 due to the paper width, the heat insulating materials 806 and 806A may be further disposed in the mold device 800. Moreover, although the illustration is similarly omitted in Figs. 7 and 8, the gas vent heating mechanism temperature control device 12 for controlling the temperature of the gas vent heating mechanism 805 may be disposed.

The toggle support 130 is coupled to the stationary platen 110 at a distance therefrom and is placed on the frame 900 so as to be movable in the mold opening and closing directions. In addition, the toggle support 130 may be movable along the guide laid on the frame 900. The guide of the toggle support 130 may be the same as that of the guide 101 of the movable platen 120.

In addition, in the present embodiment, the stationary platen 110 is fixed to the frame 900 and the toggle support 130 is movable in the mold opening and closing directions with respect to the frame 900. However, the toggle support 130 may be fixed to the frame 900, and the stationary platen 110 may be movable in the mold opening and closing directions with respect to the frame 900.

The tie bar 140 couple the stationary platen 110 and the toggle support 130 to each other at a distance L in the mold opening and closing directions. A plurality of (for example, four) the tie bars 140 may be used. Each tie bar 140 is parallel to the mold opening and closing directions and extends according to a mold clamping force . At least one tie bar 140 may be provided with a tie bar strain detector 141 that detects the strain of the tie bar 140. The tie bar strain detector 141 sends a signal indicating the detection result to the control device 700. The detection result of the tie bar strain detector 141 is used for detecting a mold clamping force.

In addition, in the present embodiment, the tie bar strain detector 141 is used as the mold clamping force detector that detects the mold clamping force. However, the present invention is not limited to this. The mold clamping force detector is not limited to the strain gauge type and may be a piezoelectric type, a capacitive type, a hydraulic type, an electromagnetic type, or the like, and the attachment position thereof is not limited to the tie bar 140.

The toggle mechanism 150 is disposed between the movable platen 120 and the toggle support 130 and moves the movable platen 120 in the mold opening and closing directions with respect to the toggle support 130. The toggle mechanism 150 is constituted of a crosshead 151, a pair of link groups, and the like. Each link group has a first link 152 and a second link 153 that are bendably and stretchably coupled to each other by a pin or the like. The first link 152 is oscillatingly attached to the movable platen 120 with a pin or the like, and the second link 153 is oscillatingly attached to the toggle support 130 with a pin or the like. The second link 153 is attached to the crosshead 151 via a third link 154.

When the crosshead 151 is moved forward and backward with respect to the toggle support 130, the first link 152 and the second link 153 bend and stretch, and the movable platen 120 moves forward and backward with respect to the toggle support 130.

In addition, the configuration of the toggle mechanism 150 is not limited to the configuration illustrated in Figs. 7 and 8. For example, in Figs. 7 and 8, the number of nodes in each link group is 5 but may be 4, and one end portion of the third link 154 may be combined with the nodes of the first link 152 and the second link 153.

The mold clamping motor 160 is attached to the toggle support 130 and activates the toggle mechanism 150. The mold clamping motor 160 moves the crosshead 151 forward and backward with respect to the toggle support 130 to bend and stretch the first link 152 and the second link 153, and moves the movable platen 120 forward and backward with respect to the toggle support 130. The mold clamping motor 160 is directly coupled to the motion conversion mechanism 170 but may be coupled to the motion conversion mechanism 170 via a belt, a pulley, or the like.

The motion conversion mechanism 170 converts the rotary motion of the mold clamping motor 160 into a linear motion of the crosshead 151. The motion conversion mechanism 170 includes a screw shaft 171 and a screw nut 172 screwed onto the screw shaft 171. A ball or a roller may be interposed between the screw shaft 171 and the screw nut 172.

The mold clamping device 100 performs a mold closing step, a mold clamping step, a mold opening step, and the like under the control of the control device 700.

In the mold closing step, the mold clamping motor 160 is driven to move the crosshead 151 forward to a mold closing completion position at a set speed to move the movable platen 120 forward and bring the movable mold 820 in touch with the stationary mold 810. The position and speed of the crosshead 151 are detected by using, for example, a mold clamping motor encoder 161 or the like. The mold clamping motor encoder 161 detects the rotation of the mold clamping motor 160 and sends a signal indicating the detection result to the control device 700. In addition, a crosshead position detector that detects the position of the crosshead 151 and a crosshead speed detector that detects the speed of the crosshead 151 are not limited to the mold clamping motor encoder 161, and general ones can be used. Additionally, a movable platen position detector that detects the position of the movable platen 120 and a movable platen speed detector that detects the speed of the movable platen 120 are not limited to the mold clamping motor encoder 161, and general ones can be used.

In the mold clamping step, the mold clamping motor 160 is further driven to further move the crosshead 151 forward from the mold closing completion position to the mold clamping position to generate a mold clamping force. At the time of mold clamping, the cavity space 801 (see Fig. 8) is formed between the movable mold 820 and the stationary mold 810, and the injection device 300 fills the cavity space 801 with a liquid molding material via the molding material introduction port 803. A molded product is obtained by solidifying the filled molding material. The number of cavity spaces 801 may be plural. In that case, a plurality of molded products can be obtained at the same time.

In the mold opening step, the mold clamping motor 160 is driven to move the crosshead 151 backward to a mold opening completion position at a set speed to move the movable platen 120 backward and separate the movable mold 820 from the stationary mold 810. After that, the ejector device 200 ejects the molded product from the movable mold 820.

The setting conditions in the mold closing step and the mold clamping step are collectively set as a series of setting conditions. For example, the speed and position (including a mold closing start position, a speed switching position, the mold closing completion position, and the mold clamping position) of the crosshead 151 and the mold clamping force in the mold closing step and the mold clamping step are collectively set as a series of setting conditions. The mold closing start position, the speed switching position, the mold closing completion position, and the mold clamping position are arranged in this order from the rear side to the front side and represent a start point and an end point of a cross section in which the speed is set.

The speed is set for each cross section. The speed switching position may be one or plural. The speed switching position may not be set. Only any one of the mold clamping position and the mold clamping force may be set.

The setting conditions in the mold opening step are also set in the same manner. For example, the speed and position (including a mold opening start position, the speed switching position, and the mold opening completion position) of the crosshead 151 in the mold opening step are collectively set as a series of setting conditions. The mold opening start position, the speed switching position, and the mold opening completion position are arranged in this order from the front side to the rear side and represent the start point and the end point of the cross section in which the speed is set. The speed is set for each cross section. The speed switching position may be one or plural. The speed switching position may not be set. The mold opening start position and the mold clamping position may be the same position. Additionally, the mold opening completion position and the mold closing start position may be the same position.

In addition, the speed and position of the movable platen 120 may be set instead of the speed and position of the crosshead 151. Additionally, the mold clamping force may be set instead of the position (for example, the mold clamping position) of the crosshead or the position of the movable platen.

Meanwhile, the toggle mechanism 150 amplifies the driving force of the mold clamping motor 160 and transmits the driving force to the movable platen 120. The amplification factor is also referred to as a toggle factor. The toggle factor changes depending on an angle θ formed by the first link 152 and the second link 153 (hereinafter, also referred to as a "link angle θ"). The link angle θ is obtained from the position of the crosshead 151. When the link angle θ is 180°, the toggle factor becomes maximum.

In a case where the thickness of the mold device 800 has changed due to replacement of the mold device 800 or a temperature change of the mold device 800, the mold thickness is adjusted such that a predetermined mold clamping force is obtained at the time of mold clamping. In the mold thickness adjustment, for example, the distance L between the stationary platen 110 and the toggle support 130 is adjusted such that the link angle θ of the toggle mechanism 150 reaches a predetermined angle at the time of the mold touch when the movable mold 820 is in touch with the stationary mold 810.

The mold clamping device 100 has the mold space adjustment mechanism 180 that performs the mold thickness adjustment by adjusting the distance L between the stationary platen 110 and the toggle support 130. The mold space adjustment mechanism 180 has a screw shaft 181 formed at a rear end portion of the tie bar 140, a screw nut 182 rotatably held by the toggle support 130, and a mold thickness adjusting motor 183 that rotates a screw nut 182 screwed to the screw shaft 181.

The screw shaft 181 and the screw nut 182 are provided for each tie bar 140. The rotation of the mold thickness adjusting motor 183 may be transmitted to a plurality of the screw nuts 182 via a rotation transmission unit 185. The plurality of screw nuts 182 can be rotated in synchronization. In addition, it is also possible to individually rotate the plurality of screw nuts 182 by changing the transmission channel of the rotation transmission unit 185.

The rotation transmission unit 185 is constituted of, for example, a gear or the like. In this case, a driven gear is formed at the outer periphery of each screw nut 182, a drive gear is attached to an output shaft of the mold thickness adjusting motor 183, and an intermediate gear that meshes with a plurality of the driven gears and the drive gear are rotatably held at a central portion of the toggle support 130. In addition, the rotation transmission unit 185 may be constituted of a belt, a pulley, or the like instead of the gear.

The operation of the mold space adjustment mechanism 180 is controlled by the control device 700. The control device 700 drives the mold thickness adjusting motor 183 to rotate the screw nut 182, thereby adjusting the position of the toggle support 130, which rotatably holds the screw nut 182, with respect to the stationary platen 110, and adjusts the distance L between the stationary platen 110 and the toggle support 130.

In addition, in the present embodiment, the screw nut 182 is held to be rotatable with respect to the toggle support 130, and the tie bar 140 on which the screw shaft 181 is formed is fixed to the stationary platen 110. However, the present invention is not limited to this.

For example, the screw nut 182 may be held to be rotatable with respect to the stationary platen 110, and the tie bar 140 may be fixed to the toggle support 130. In this case, the distance L can be adjusted by rotating the screw nut 182.

Additionally, the screw nut 182 may be fixed to the toggle support 130, and the tie bar 140 may be held to be rotatable with respect to the stationary platen 110. In this case, the distance L can be adjusted by rotating the tie bar 140.

Moreover, the screw nut 182 may be fixed to the stationary platen 110 and the tie bar 140 may be held to be rotatable with respect to the toggle support 130.

In this case, the distance L can be adjusted by rotating the tie bar 140.

The distance L is detected by using a mold thickness adjusting motor encoder 184. The mold thickness adjusting motor encoder 184 detects the rotational amount and the rotational direction of the mold thickness adjusting motor 183, and sends a signal indicating the detection result to the control device 700. The detection result of the mold thickness adjusting motor encoder 184 is used for monitoring and controlling the position and distance L of the toggle support 130. In addition, a toggle support position detector that detects the position of the toggle support 130 and a distance detector that detects the distance L are not limited to the mold thickness adjusting motor encoder 184, and general ones can be used.

The mold space adjustment mechanism 180 adjusts the distance L by rotating one of the screw shaft 181 and the screw nut 182 that are screwed to each other. A plurality of the mold space adjustment mechanisms 180 may be used, or a plurality of the mold thickness adjusting motors 183 may be used.

In addition, the mold space adjustment mechanism 180 of the present embodiment has the screw shaft 181 formed on the tie bar 140 and the screw nut 182 screwed onto the screw shaft 181 in order to adjust the distance L. However, the present invention is not limited to this.

For example, the mold space adjustment mechanism 180 may have a tie bar temperature controller that regulates the temperature of the tie bar 140. The tie bar temperature controller is attached to each tie bar 140 and adjusts the temperature of the plurality of tie bars 140 in cooperation with each other. The higher the temperature of the tie bar 140, the longer the tie bar 140 is due to thermal expansion, and the larger the distance L is. The temperatures of the plurality of tie bars 140 may be adjusted independently.

The tie bar temperature controller includes a heating unit such as a heater, and regulates the temperature of the tie bar 140 by heating. The tie bar temperature controller may include a cooler such as a water cooling jacket, and regulate the temperature of the tie bar 140 by cooling. The tie bar temperature controller may include both the heating unit and the cooler.

In addition, the mold clamping device 100 of the present embodiment is of a horizontal type in which the mold opening and closing directions is the horizontal direction but may be of a vertical type in which the mold opening and closing directions is the up-down direction. The vertical type mold clamping device has a lower platen, an upper platen, the toggle support, the tie bar, the toggle mechanism, the mold clamping motor, and the like. Any one of the lower platen and the upper platen is used as the stationary platen, and the other one is used as the movable platen. A lower mold is attached to the lower platen, and an upper mold is attached to the upper platen. The lower mold and the upper mold constitute the mold device. The lower mold may be attached to the lower platen via a rotary table . The toggle support is disposed below the lower platen and is coupled to the upper platen via the tie bar. The tie bar couples the upper platen and the toggle support to each other at a distance in the mold opening and closing directions . The toggle mechanism is disposed between the toggle support and the lower platen to lift and lower the movable platen. The mold clamping motor activates the toggle mechanism. In a case where the mold clamping device is of the vertical type, the number of tie bars is usually three. In addition, the number of tie bars is not particularly limited.

In addition, the mold clamping device 100 of the present embodiment has the mold clamping motor 160 as a drive source but may have a hydraulic cylinder instead of the mold clamping motor 160. Additionally, the mold clamping device 100 may have a linear motor for mold opening and closing and an electromagnet for mold clamping.

### (Ejector device)

In the description of the ejector device 200, similarly to the description of the mold clamping device 100, the movement direction (the right direction in Figs. 7 and 8) of the movable platen 120 at the time of mold closing will be described as the front, and the movement direction (the left direction in Figs. 7 and 8) of the movable platen 120 at the time of mold opening will be described as the rear.

The ejector device 200 ejects a molded product from the mold device 800. The ejector device 200 has an ejector motor 210, a motion conversion mechanism 220, an ejector rod 230, and the like.

The ejector motor 210 is attached to the movable platen 120. The ejector motor 210 is directly coupled to the motion conversion mechanism 220 but may be coupled to the motion conversion mechanism 220 via a belt, a pulley, or the like.

The motion conversion mechanism 220 converts the rotary motion of the ejector motor 210 into the linear motion of the ejector rod 230. The motion conversion mechanism 220 includes a screw shaft and a screw nut screwed onto the screw shaft. A ball or a roller may be interposed between the screw shaft and the screw nut.

The ejector rod 230 is movable forward and backward in a through-hole of the movable platen 120. A front end portion of the ejector rod 230 comes into contact with the movable member 830 that is disposed inside the movable mold 820 so as to be movable forward and backward. The front end portion of the ejector rod 230 may or may not be coupled to the movable member 830.

The ejector device 200 performs an ejection step under the control of the control device 700.

In the ejection step, the ejector motor 210 is driven to move the ejector rod 230 forward from a standby position to an ejection position at a set speed, thereby moving the movable member 830 forward and ejecting the molded product. After that, the ejector motor 210 is driven to move the ejector rod 230 backward at a set speed and move the movable member 830 backward to the original standby position. The position and speed of the ejector rod 230 are detected by using, for example, an ejector motor encoder 211. The ejector motor encoder 211 detects the rotation of the ejector motor 210 and sends a signal indicating the detection result to the control device 700. In addition, an ejector rod position detector that detects the position of the ejector rod 230 and an ejector rod speed detector that detects the speed of the ejector rod 230 are not limited to the ejector motor encoder 211, and general ones can be used.

### (Injection device)

In the description of the injection device 300, unlike the description of the mold clamping device 100 and the description of the ejector device 200, the movement direction (the left direction in Figs. 7 and 8) of a screw 330 during filling will be described as the front and the movement direction (the right direction in Figs. 7 and 8) of the screw 330 during measuring be described as the rear.

The injection device 300 is installed on a slide base 301 that is movable forward and backward with respect to the frame 900 and is movable forward and backward with respect to the mold device 800. The injection device 300 is in touch with the mold device 800 and fills the cavity space 801 in the mold device 800 with the molding material. The injection device 300 includes, for example, a cylinder 310, a nozzle 320, a screw 330, a plasticizing motor 340, an injection motor 350, a pressure detector 360, and the like.

The cylinder 310 heats the molding material supplied from a feed port 311 to the inside thereof. A resin can be used as the molding material. The molding material is formed into, for example, a pellet shape and is supplied to the feed port 311 in a solid state. The feed port 311 is formed at a rear portion of the cylinder 310. A cooler 312 such as a water-cooled cylinder is provided at an outer periphery of the rear portion of the cylinder 310. A heating unit 313 such as a band heater and a temperature measurer 314 are provided at an outer periphery of the cylinder 310 in front of the cooler 312.

The cylinder 310 is divided into a plurality of zones in an axial direction of the cylinder 310 (left-right direction in Figs. 7 and 8). The heating unit 313 and the temperature measurer 314 are provided in each zone. For each zone, the control device 700 controls the heating unit 313 such that the detected temperature of the temperature measurer 314 reaches a set temperature.

The nozzle 320 is provided at a front end portion of the cylinder 310 and is pressed against the mold device 800. The heating unit 313 and the temperature measurer 314 are provided at an outer periphery of the nozzle 320. The control device 700 controls the heating unit 313 such that the detected temperature of the nozzle 320 reaches a set temperature.

The screw 330 is disposed in the cylinder 310 so as to be rotatable and movable forward and backward. When the screw 330 is rotated, the molding material is fed forward along a helical groove of the screw 330. The molding material is gradually melted by the heat from the cylinder 310 while being fed forward. As the liquid molding material is fed to the front of the screw 330 and accumulated at the front portion of the cylinder 310, the screw 330 is moved backward. Thereafter, when the screw 330 is moved forward, the liquid molding material accumulated in front of the screw 330 is injected from the nozzle 320 and filled in the mold device 800.

A backflow prevention ring 331 is attached to a front portion of the screw 330 so as to be movable forward and backward as a backflow prevention valve that prevents the backflow of the molding material from the front to the rear of the screw 330 when the screw 330 is pushed forward.

When the screw 330 is moved forward, the backflow prevention ring 331 is pushed backward by the pressure of the molding material in front of the screw 330 and is moved backward relative to the screw 330 up to a closed position (see Fig. 8) where the flow path of the molding material is blocked. Accordingly, the molding material accumulated in the front of the screw 330 is prevented from flowing backward.

On the other hand, when the screw 330 is rotated, the backflow prevention ring 331 is pushed forward by the pressure of the molding material fed forward along the helical groove of the screw 330 and is moved forward relative to the screw 330 up to an open position where the flow path of the molding material is opened. (See Fig. 7). Accordingly, the molding material is fed to the front of the screw 330.

The backflow prevention ring 331 may be of either a co-rotation type in which the backflow prevention ring rotates together with the screw 330 or of a non-co-rotation type in which the backflow prevention ring does not rotate together with the screw 330.

In addition, the injection device 300 may have a drive source for moving the backflow prevention ring 331 forward and backward between the open position and the closed position with respect to the screw 330.

The plasticizing motor 340 rotates the screw 330. A drive source for rotating the screw 330 is not limited to the plasticizing motor 340 and may be, for example, a hydraulic pump.

The injection motor 350 moves the screw 330 forward and backward. A motion conversion mechanism or the like for converting the rotary motion of the injection motor 350 into the linear motion of the screw 330 is provided between the injection motor 350 and the screw 330. The motion conversion mechanism has, for example, a screw shaft and a screw nut screwed onto the screw shaft. A ball, a roller, or the like may be provided between the screw shaft and the screw nut. The drive source for moving the screw 330 forward and backward is not limited to the injection motor 350 and may be, for example, a hydraulic cylinder.

The pressure detector 360 detects the pressure transmitted between the injection motor 350 and the screw 330. The pressure detector 360 is provided in a force transmission channel between the injection motor 350 and the screw 330 to detect the pressure acting on the pressure detector 360.

The pressure detector 360 sends a signal indicating the detection result to the control device 700.

The detection result of the pressure detector 360 is used for controlling and monitoring the pressure received from the molding material by the screw 330, the back pressure on the screw 330, the pressure acting on the molding material from the screw 330, and the like.

The injection device 300 performs a plasticizing step, a filling step, a holding pressure step, and the like under the control of the control device 700.

In the plasticizing step, the plasticizing motor 340 is driven to rotate the screw 330 at a set rotating speed and feed the molding material forward along the helical groove of the screw 330.

Accordingly, the molding material is gradually melted. As the liquid molding material is fed to the front of the screw 330 and accumulated at the front portion of the cylinder 310, the screw 330 is moved backward. The rotating speed of the screw 330 is detected by using, for example, a plasticizing motor encoder 341. The plasticizing motor encoder 341 detects the rotation of the plasticizing motor 340 and sends a signal indicating the detection result to the control device 700. In addition, the screw rotating speed detector that detects the rotating speed of the screw 330 is not limited to the plasticizing motor encoder 341, and a general screw can be used.

In the plasticizing step, the injection motor 350 may be driven to apply a set back pressure to the screw 330 in order to limit the sudden backward movement of the screw 330. The back pressure on the screw 330 is detected using, for example, the pressure detector 360. The pressure detector 360 sends a signal indicating the detection result to the control device 700. When the screw 330 moves backward to a measuring completion position and a predetermined amount of molding material is accumulated in front of the screw 330, the plasticizing step is completed.

In the filling step, the injection motor 350 is driven to move the screw 330 forward at a set speed, and the liquid molding material accumulated in front of the screw 330 is filled into the cavity space 801 in the mold device 800 via a molding material introduction port 803 The position and speed of the screw 330 are detected using, for example, an injection motor encoder 351. The injection motor encoder 351 detects the rotation of the injection motor 350 and sends a signal indicating the detection result to the control device 700. When the position of the screw 330 reaches a set position, switching from the filling step to the holding pressure step (so-called V/P switching) is performed. A position where the V/P switching is performed is also referred to as a V/P switching position. The set speed of the screw 330 may be changed depending on the position, time, and the like of the screw 330.

In addition, after the position of the screw 330 reaches the set position in the filling step, the screw 330 may be temporarily stopped at the set position, and then, the V/P switching may be performed. Immediately before the V/P switching, instead of stopping the screw 330, the screw 330 may be moved forward or backward at a slow speed. Additionally, a screw position detector for detecting the position of the screw 330 and a screw speed detector for detecting the speed of the screw 330 are not limited to the injection motor encoder 351, and general ones can be used.

In the holding pressure step, the injection motor 350 is driven to push the screw 330 forward, hold the pressure of the molding material (hereinafter, also referred to as "holding pressure") at a front end portion of the screw 330 at a set pressure, and push the molding material remaining in the cylinder 310 toward the mold device 800. The shortage of the molding material due to cooling shrinkage in the mold device 800 can be replenished. The holding pressure is detected using, for example, the pressure detector 360. The pressure detector 360 sends a signal indicating the detection result to the control device 700. A set value of the holding pressure may be changed depending on the elapsed time from the start of the holding pressure step.

In the holding pressure step, the molding material in the cavity space 801 in the mold device 800 is gradually cooled, and at the time of the completion of the holding pressure step, the inlet of the cavity space 801 is blocked with the solidified molding material. This state is referred to as a gate seal, and the backflow of the molding material from the cavity space 801 is prevented. After the holding pressure step, the cooling step is started. In the cooling step, the molding material in the cavity space 801 is solidified. The plasticizing step may be performed during the cooling step to shorten the molding cycle time.

In addition, the injection device 300 of the present embodiment is of an in-line screw type, but may be of a pre-plastic type or the like. The pre-plastic type injection device supplies the molding material melted in a plasticizing cylinder to the injection cylinder and injects the molding material from the injection cylinder into the mold device. A screw is disposed in the plasticizing cylinder to be rotatable or rotatable and movable forward and backward, and a plunger is disposed in an injection cylinder so as to be movable forward and backward.

Additionally, the injection device 300 of the present embodiment is of a horizontal type in which the axial direction of the cylinder 310 is the horizontal direction but may be a vertical type in which the axial direction of the cylinder 310 is the up-down direction. The mold clamping device combined with the vertical type injection device 300 may be of a vertical type or of a horizontal type. Similarly, the mold clamping device combined with the horizontal type injection device 300 may be of a horizontal type or a vertical type.

### (Moving device)

In the description of the moving device 400, similarly to the description of the injection device 300, the movement direction of the screw 330 during filling (the left direction in Figs. 7 and 8) will be described as the front, and the movement direction of the screw 330 during measuring (the right direction in Figs. 7 and 8) will be described as the rear.

The moving device 400 moves the injection device 300 forward and backward with respect to the mold device 800. Additionally, the moving device 400 presses the nozzle 320 against the mold device 800 to generate a nozzle touch pressure. The moving device 400 includes a hydraulic pump 410, a motor 420 as a drive source, a hydraulic cylinder 430 as a hydraulic actuator, and the like.

The hydraulic pump 410 has a first port 411 and a second port 412. The hydraulic pump 410 is a pump that is rotatable in both directions and switches the rotational direction of the motor 420 to suck a hydraulic fluid (for example, oil) from any one of the first port 411 and the second port 412 and discharge the hydraulic fluid from the other to generate hydraulic pressure. In addition, the hydraulic pump 410 may suck the hydraulic fluid from a tank and discharge the hydraulic fluid from any one of the first port 411 and the second port 412.

The motor 420 activates the hydraulic pump 410. The motor 420 drives the hydraulic pump 410 in the rotational direction and rotation torque according to a control signal from the control device 700. The motor 420 may be an electric motor or an electric servomotor.

The hydraulic cylinder 430 has a cylinder body 431, a piston 432, and a piston rod 433. The cylinder body 431 is fixed to the injection device 300. The piston 432 partitions the inside of the cylinder body 431 into a front chamber 435 as a first chamber and a rear chamber 436 as a second chamber. The piston rod 433 is fixed to the stationary platen 110.

The front chamber 435 of the hydraulic cylinder 430 is connected to the first port 411 of the hydraulic pump 410 via a first flow path 401. The hydraulic fluid discharged from the first port 411 is supplied to the front chamber 435 via the first flow path 401 to push the injection device 300 forward. The injection device 300 is moved forward and the nozzle 320 is pressed against the stationary mold 810. The front chamber 435 functions as a pressure chamber that generates the nozzle touch pressure of the nozzle 320 by the pressure of the hydraulic fluid supplied from the hydraulic pump 410.

On the other hand, the rear chamber 436 of the hydraulic cylinder 430 is connected to the second port 412 of the hydraulic pump 410 via a second flow path 402. The hydraulic fluid discharged from the second port 412 is supplied to the rear chamber 436 of the hydraulic cylinder 430 via the second flow path 402 to push the injection device 300 backward. The injection device 300 is moved backward and the nozzle 320 is separated from the stationary mold 810.

In addition, in the present embodiment, the moving device 400 includes a hydraulic cylinder 430, but the present invention is not limited thereto. For example, instead of the hydraulic cylinder 430, an electric motor and a motion conversion mechanism that converts the rotary motion of the electric motor into a linear motion of the injection device 300 may be used.

### (Control device)

The control device 700 is constituted of, for example, a computer, and has a central processing unit (CPU) 701, a storage medium 702 such as a memory, an input interface 703, and an output interface 704, as illustrated in Figs. 7 and 8. The control device 700 performs various controls by causing the CPU 701 to execute a program stored in the storage medium 702. Additionally, the control device 700 receives a signal from the outside with the input interface 703 and transmits the signal to the outside with the output interface 704.

The control device 700 repeatedly manufactures a molded product by repeatedly performing the mold closing step, the mold clamping step, the mold opening step, and the like. Additionally, the control device 700 performs the plasticizing step, the filling step, the holding pressure step, and the like during the mold clamping step. A series of operations for obtaining a molded product, for example, the operation from the start of the plasticizing step to the start of the next plasticizing step are also referred to as "shot" or "molding cycle". Additionally, the time required for one shot is also referred to as "molding cycle time".

A single molding cycle includes, for example, the plasticizing step, the mold closing step, the mold clamping step, the filling step, the holding pressure step, the cooling step, the mold opening step, and the ejection step in this order. The order herein is the order of starting the respective steps. The filling step, the holding pressure step, and the cooling step are performed between the start of the mold clamping step and the end of the mold clamping step. The end of the mold clamping step coincides with the start of the mold opening step. In addition, in order to shorten the molding cycle time, a plurality of steps may be performed at the same time. For example, the plasticizing step may be performed during the cooling step of the previous molding cycle. In this case, the mold closing step may be performed at the beginning of the molding cycle. Additionally, the filling step may be started during the mold closing step. Additionally, the ejection step may be started during the mold opening step.

In a case where an opening and closing valve that opens and closes the flow path of the nozzle 320 is provided, the mold opening step may be started during the plasticizing step. This is because, even when the mold opening step is started during the plasticizing step, the molding material does not leak from the nozzle 320 when the opening and closing valve closes the flow path of the nozzle 320.

The control device 700 is connected to an operation device 750 and a display device 760.

The operation device 750 receives an input operation by a user and outputs a signal according to the input operation to the control device 700. The display device 760 displays an operation screen according to the input operation in the operation device 750 under the control of the control device 700.

The operation screen is used for setting the injection molding machine 10. A plurality of the operation screens are prepared and can be switched and displayed or displayed in an overlapping manner. The user performs setting or the like of the injection molding machine 10 (including inputting a set value) by operating the operation device 750 while looking at an operation screen displayed on the display device 760.

The operation device 750 and the display device 760 may be constituted of, for example, a touch panel and may be integrated. In addition, the operation device 750 and the display device 760 of the present embodiment are integrated but may be independently provided. Additionally, a plurality of the operation devices 750 may be provided.

In a case where the already-described gas vent heating mechanism temperature control device 12 is provided in the mold system, the gas vent heating mechanism temperature control device 12 may be incorporated in the control device 700 and may not be separately provided. That is, the functions of the gas vent heating mechanism temperature control device 12 may be carried out by the control device 700.

According to the injection molding system of the present embodiment described above, the already-described mold system is included. For this reason, the temperature of the gas vent can be independently controlled, and the clogging of the gas vent can be suppressed.

The present international application claims priority based on Japanese Patent Application No. 2018-060813 filed on March 27, 2018, and the entire contents of the application are incorporated in the present international application by reference.

### Reference Signs List

810: stationary mold
820: movable mold
801: cavity space
802: gas vent
802A: opening of gas vent on cavity space side
802B: opening of gas vent on external space side of mold device
804: mold device temperature adjusting mechanism
805: gas vent heating mechanism
806: heat insulating material
21: resin

## Claims

1. A mold system comprising:
a mold device that has a stationary mold and a movable mold and includes a cavity space formed inside by the stationary mold and the movable mold and a gas vent that allows the cavity space and an external space to communicate with each other;
a mold device temperature adjusting mechanism that adjusts a temperature of the mold device; and
a gas vent heating mechanism that heats the gas vent.

2. The mold system according to claim 1, further comprising:
a gas vent heating mechanism temperature control device that controls a temperature of the gas vent heating mechanism such that a temperature of a gas flowing through the gas vent at an opening of the gas vent on the external space side of the mold device is equal to or higher than a temperature of the gas at an opening of the gas vent on the cavity space side.

3. The mold system according to claim 1 or 2,
wherein the gas vent heating mechanism heats the gas vent at least while a resin is supplied to the cavity space.

4. The mold system according to any one of claims 1 to 3,
wherein at least a portion of an inner wall of the gas vent is formed by the gas vent heating mechanism.

5. The mold system according to any one of claims 1 to 4,
wherein the gas vent heating mechanism is disposed so as to surround the gas vent in a cross section perpendicular to a flow direction of the gas vent.

6. The mold system according to any one of claims 1 to 5, further comprising:
a heat insulating material between the cavity space and the gas vent heating mechanism.
